# EUROPÄISCHE PATENTSCHRIFT

(11) **EP 2 706 026 B1**
(45) Veröffentlichungstag und Bekanntmachung des Hinweises auf die Patenterteilung: **16.11.2016**
(21) Anmeldenummer: 12006618.8
(22) Anmeldetag: 20.09.2012
(51) Int. Cl.: B65G 47/29, B65G 17/00, B29C 51/26, B29C 51/46, B65G 47/88

(54) **Anlage umfassend eine Thermoformmaschine und eine Anzahl an Arbeitsstationen sowie Verfahren zum Betrieb einer solchen Anlage**
Device comprising a thermoforming machine and a number of work stations and method for operating such a device
Installation comprenant une machine de thermoformage et un certain nombre de stations de travail ainsi que procédé de fonctionnement d'une telle installation

(30) Priorität: 06.09.2012 DE 102012017577
(43) Veröffentlichungstag der Anmeldung: 12.03.2014
(73) Patentinhaber: Gabler Thermoform GmbH & Co. KG, 23568 Lübeck (DE)
(72) Erfinder: Rowedder, Axel, 23623 Ahrensbök (DE)
(74) Vertreter: Kross, Ulrich

(56) Entgegenhaltungen:
- US-A- 5 591 463
- US-A- 5 919 496

## Beschreibung

Die Erfindung betrifft eine Anlage umfassend eine Thermoformmaschine sowie eine Anzahl an Arbeitsstationen, wobei zu fertigende Thermoformprodukte zwischen der Thermoformmaschine und den Arbeitsstationen auf Paletten gefördert werden können, wobei die Paletten mit einem Förderelement verbunden sind und von diesem in eine Förderrichtung zwischen der Thermoformmaschine und den Arbeitsstationen bewegt werden können. Des weiteren betrifft die Erfindung ein Verfahren zum Betrieb einer solchen Anlage. Als nächstliegender Stand der Technik für das Verfahren und die Anlage wird die US 5 919 496 A angesehen.

Eine gattungsgemäße Anlage ist aus der DE 30 48 927 A1 bekannt. Ähnliche Lösungen zeigen die US 6 398 538 B1 und die DE 296 08 477 U1**.** Demgemäß sind Transferelemente (nachfolgend als Paletten bezeichnet; auch der Begriff "Template" ist gebräuchlich) bekannt, mit deren Hilfe thermogeformte Produkte von Bearbeitungsstation zu Bearbeitungsstation verbracht werden können, um nach und nach alle erforderlichen Prozessschritte während ihrer Fertigung zu durchlaufen. Derartige Arbeitsstationen sind beispielsweise Kühlstationen, Dekorations-Stationen, Qualitätsprüfungstationen, Einlegestationen für Saugflies, Lochstanz-Stationen, Befüllstationen und Stapelstationen.

Im genannten Stand der Technik sind umlaufende Kettensysteme beschrieben, an denen eine Vielzahl von Paletten befestigt ist. Gleichermaßen sind auch Antriebe über Spindeln bekannt, wobei die einzelnen Paletten über Mitnehmer angetrieben werden.

Kettentriebe sind oft bevorzugt. Allerdings können auch andere Antriebselemente eingesetzt werden, beispielsweise Zahnriemenantriebe, Flachriemenantriebe, Zahnstangenantriebe und Spindelantriebe.

Ein generelles Problem bei gattungsgemäßen Anlagen ist die Positioniergenauigkeit der Paletten an der jeweiligen Arbeitsstation bzw. an der Thermoformmaschine.

Hier wirkt sich zunächst aus, dass die Anlagen immer größer werden (beispielsweise sind bei der Herstellung von Kaffeekapseln per Thermoformen bis zu 100 Thermoformprodukte pro Zyklus in einem Thermoformwerkzeug herzustellen).

Des weiteren ergibt sich die Forderung, immer mehr Prozessschritte in einer Produktionsanlage durchzuführen (beispielsweise Entnahme, Kühlung, Qualitätsprüfung, Lochstanzung und Stapeln).

Schließlich steigen auch die Qualitätsansprüche an die Thermoformprodukte ständig. So wird beispielsweise bei der Fertigung von Blumentöpfen im Thermoformverfahren eine Vielzahl an Sicken geformt und ebenso eine Vielzahl von Lochstanzungen eingebracht. Die Sicken und die Stanzungen müssen dabei nicht nur optisch im Einklang stehen, sondern ebenfalls funktionell, da es ansonsten zu fehlerhaften Bewässerungen kommen kann.

Die hohe Anzahl an Produktionsschritten machen entsprechend lange Palettentransporte erforderlich. Zwar können die Antriebselemente, beispielsweise die Kette, über hochpräzise Stellantriebe positioniert werden. Dennoch ergeben sich nachteilig erhebliche Positionsabweichungen infolge Temperaturveränderungen, Verschleißerscheinungen und Fertigungstoleranzen. Ebenso stellt die große Anzahl an Thermoformprodukten (hohe Nutzenanzahl je Transferschritt) eine immer größere Anforderung an die Genauigkeit.

Es wird versucht, die genannten Probleme dadurch zu beherrschen, dass sehr präzise arbeitende Antriebssysteme eingesetzt werden, insbesondere lagegeregelte Servomotoren mit spielarmen Antriebselementen, wobei ein hoher Standard bei der Fertigungsgenauigkeit eingehalten wird. So werden sehr genaue Führungen zwischen den Bearbeitungsstationen und komplexe Einstellvorrichtungen an den einzelnen Stationen vorgesehen, um die erforderliche Genauigkeit einreichen zu können.

Nachteilig ist hierbei indes, dass dies einen hohen zeitlichen Aufwand erfordert und somit entsprechend teuer ist. Dieser Effekt tritt besonders dann zutage, wenn eine häufige Produktumstellungen erfolgen muss, was im übrigen die Anlagenverfügbarkeit merklich senkt.

Ein anderes Problem ist der unvermeidliche Verschleiß, der während der Gebrauchsdauer des mechanischen Transfersystems auftritt und der natürlich negative Auswirkungen auf die Positionspräzision der Paletten hat. Hierdurch werden den oben genannten Möglichkeiten Grenzen gesetzt, da im Verschleißfalle alle genannten Maßnahmen nicht mehr greifen und somit die Qualität der Produkte sinkt ober sogar Störungen bzw. Produktionsstillstände der Anlage zu befürchten sind.

Der Erfindung liegt im Lichte der genannten Problematik die Aufgabe zugrunde, eine Anlage umfassend eine Thermoformmaschine sowie eine Anzahl an Arbeitsstationen und ein Verfahren zum Betrieb einer solchen Anlage zu schaffen, mit der bzw. mit dem es möglich ist, in vereinfachter Weise eine präzise Positionierung der Paletten mit den Thermoformprodukten in den einzelnen Arbeitsstationen bzw. an der Thermoformmaschine zu ermöglichen, wobei keine übermäßig hohen apparativen Maßnahmen ergriffen werden müssen. Auch Verschleiß soll problemlos ausgeglichen werden können, so dass dauerhaft eine sichere und genaue Positionierung der Paletten in den einzelnen Arbeitsstationen sichergestellt sein soll.

Die Lösung dieser Aufgabe durch die Erfindung ist dadurch gekennzeichnet, dass an mindestens einer Arbeitsstation mindestens ein in Förderrichtung ortsfester mechanischer Anschlag angeordnet ist und dass an den Paletten mindestens ein korrespondierender Gegenanschlag angeordnet ist, wobei die Paletten relativ zum Förderelement zumindest in Förderrichtung elastisch gelagert sind, so dass zwischen der Palette und dem Förderelement eine Verschiebung in Förderrichtung möglich ist.

Bevorzugt ist vorgesehen, dass die Paletten relativ zum Förderelement auch in eine Richtung quer zur Förderrichtung elastisch gelagert sind, so dass zwischen der Palette und dem Förderelement eine Verschiebung in Richtung quer zur Förderrichtung möglich ist. Diese Richtung quer zur Förderrichtung ist bevorzugt horizontal ausgerichtet.

Zwischen den Paletten und dem Förderelement können zur Herstellung der Elastizität in Förderrichtung und gegebenenfalls in Richtung quer zu derselben Federmittel wirksam angeordnet sein. Die Federmittel sind bevorzugt mechanische Federelemente, insbesondere Schraubenfedern oder Blattfedern. Es können aber auch Federmittel in Form elastomerer Materialien oder Gummimaterialien vorgesehen werden oder pneumatische bzw. hydraulische Elemente.

An der Arbeitsstation können zwei voneinander beabstandete mechanische Anschläge angeordnet sein, wobei an den Paletten zwei korrespondierende Gegenanschläge angeordnet sind.

Der mindestens eine mechanische Anschlag ist bevorzugt als zylindrischer Bolzen ausgebildet. Der mindestens eine mechanische Anschlag kann des weiteren mit einem Bewegungsmittel in Verbindung stehen, mit dem er in der Höhe verstellbar ist.

Der mindestens eine Gegenanschlag weist gemäß einer bevorzugten Ausgestaltung eine V-förmige Ausnehmung zur Aufnahme des Anschlags auf. Damit kann in einfacher Weise die Palette gut geführt in ihre Soll-Position gefahren werden.

Das Förderelement ist zumeist eine Förderkette. Es kann aber auch vorgesehen sein, dass das Förderelement ein Zahnriemen, ein Flachriemen, eine Zahnstange oder eine Spindel ist.

Das vorgeschlagene Verfahren zum Betrieb einer solchen Anlage sieht vor, dass zwischen der Thermoformmaschine und den Arbeitsstationen jeweils ein konstanter definierter Wegabschnitt liegt, um den das Förderelement bei jeder Taktung weiterbewegt wird, wobei erfindungsgemäß vorgesehen ist, dass das Förderelement bei jeder Bewegung der Paletten um einen definierten Versatzbetrag in Förderrichtung weiter bewegt wird, als es der geometrischen Mitte der Palette entspricht.

Dieser Versatzbetrag beträgt bevorzugt zwischen 3 mm und 50 mm, besonders bevorzugt zwischen 5 mm und 20 mm.

Damit kann ein sicheres elastisches Anliegen der Palette mit ihren Gegenanschlägen an den Anschlägen in der Arbeitsstation gewährleistet werden, auch wenn Ungenauigkeiten der Palettenführung oder Verschleiß vorliegen.

Die Erfindung stellt also auf ein Transfersystem ab, das lediglich einmalig eingerichtet werden muss; indes wird jede weitere - auch verschleißbedingte - Einstellarbeit überflüssig. Hierzu werden die Paletten selber bzw. die Palettenträger am Antriebselement (z. B. Förderkette) schwimmend befestigt. Demgemäß ergeben sich ein Freiheitsgrad zwischen Antriebselement und Palette bzw. Palettenrahmen in Förderrichtung, d. h. in Transportrichtung, und vorzugsweise auch ein Freiheitsgrad zwischen Antriebselement und Palette bzw. Palettenrahmen transversal zur Transportrichtung. Die sich daraus ergebenen Verschiebewege werden durch Federn vorgespannt.

Die Palette wird beim Weitertakten in eine Bearbeitungsstation um einen definierten Betrag über die geometrische Mitte hinaus in Förderrichtung verschoben, so dass sichergestellt ist, dass die Palette federvorgespannt an den Anschlag gezogen wird und somit definiert anliegt.

Jede Palette bzw. jeder Palettenrahmen ist mit einer oder mehreren Zentrierkanten, Zentrierkonturen oder Zentriertaschen ausgerüstet, wobei vorzugsweise jeweils zwei Zentriertaschen vorgesehen sind. Jede Arbeitsstation (Prozessstation) - jedenfalls jede Station mit erhöhten Positionieranforderungen - ist mit einer Indexierung in Form der Anschläge ausgerüstet. Die Anschläge stellen im Zusammenwirken mit den Gegenanschlägen eine Vorrichtung zur präzisen Positionierung der Palette dar. Beim Erreichen der gewünschten Palettenposition fahren die Gegenanschläge (Zentriertaschen) der Paletten gegen die Anschläge (Indexbolzen), so dass eine definierte Lage der Palette gegeben ist.

Die federnde, d. h. schwimmende Lagerung der Paletten bzw. der Palettenrahmen bewirkt stets eine reproduzierbare Lage der Paletten relativ zu den Indexierbolzen und somit zur Arbeitsstation.

Wie bereits erwähnt, wird die erforderliche Transportschrittlänge (Verschiebeweg pro Taktung) um einen definierten Betrag verlängert. Hierdurch ergibt sich eine Federvorspannung zwischen Antriebselement und Palette bzw. Palettenrahmen, so dass stets eine spielfreie Anlage der Anschläge (Indexbolzen) an den Gegenanschlägen (Zentriertasche) gewährleistet ist. Somit ergibt sich eine größtmögliche Positioniergenauigkeit in Transportrichtung und transversal hierzu.

Die Indexierung (Anschläge) wird vorzugsweise mit einer Vorrichtung zu der Prozessstation oder zu dem in der Prozessstation verbauten Werkzeug eingerichtet.

In der Zeichnung ist ein Ausführungsbeispiel der Erfindung dargestellt. Es zeigen:
- Fig. 1: schematisch eine Anlage in der Seitenansicht, die eine Thermoformmaschine und Arbeitsstationen aufweist, von denen nur eine angedeutet ist,
- Fig. 2: in der Seitenansicht eine Palette mit Thermoformprodukten, die von einem Förderelement in Förderrichtung bewegt wird,
- Fig. 3: die zu Fig. 2 zugehörige Draufsicht,
- Fig. 4: das Detail "Z" gemäß Fig. 3,
- Fig. 5a: in der Seitenansicht die Palette samt Thermoformprodukten kurz vor dem Erreichen einer Arbeitsstation und
- Fig. 5b: in der Seitenansicht die Palette gemäß Fig. 5a, wobei nunmehr die Arbeitsstation erreicht und die Palette in definierter Position ausgerichtet ist.

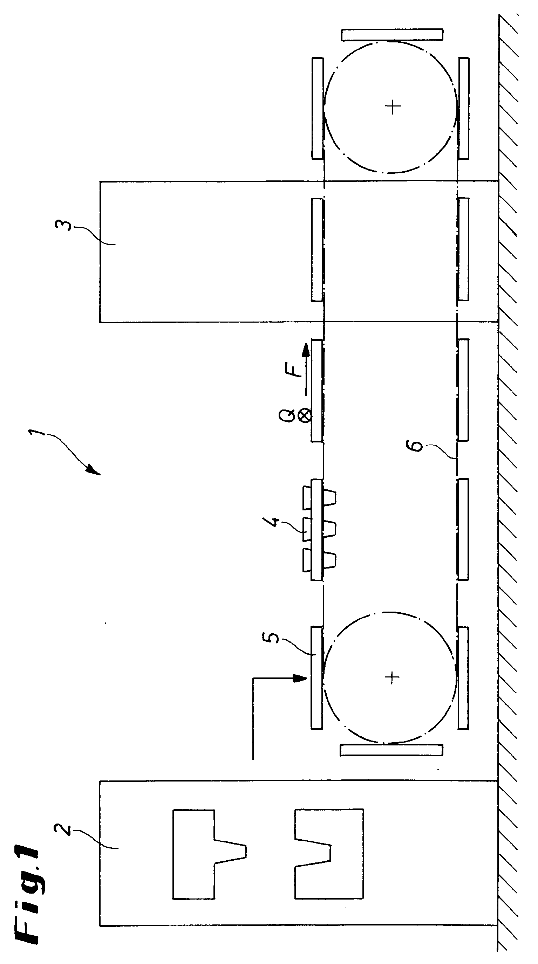

In Fig. 1 ist eine Anlage 1 zur Herstellung von Thermoformprodukten zu sehen, die als zentrales Element eine Thermoformmaschine 2 umfasst sowie eine Anzahl von Arbeitsstationen 3, von der nur eine schematisch dargestellt ist. Der Transport der Thermoformprodukte 4 erfolgt über Paletten 5 (wobei diese im Sinne der vorliegenden Erfindung auch gegebenenfalls ein Palettenträgerelement bzw. einen Palettenrahmen umfasst). Die Paletten werden durch ein Förderelement 6 gefördert, das vorliegend als Kettenförderer ausgebildet ist. Die Förderrichtung ist mit F angegeben. Das Förderelement 6 weist eine Kette auf, die - was nur schematisch angedeutet ist - über zwei Ketten-Zahnräder geführt ist. Die Paletten 5 sind, was nur für zwei der Kettenglieder angedeutet ist, auf den einzelnen Kettengliedern angeordnet.

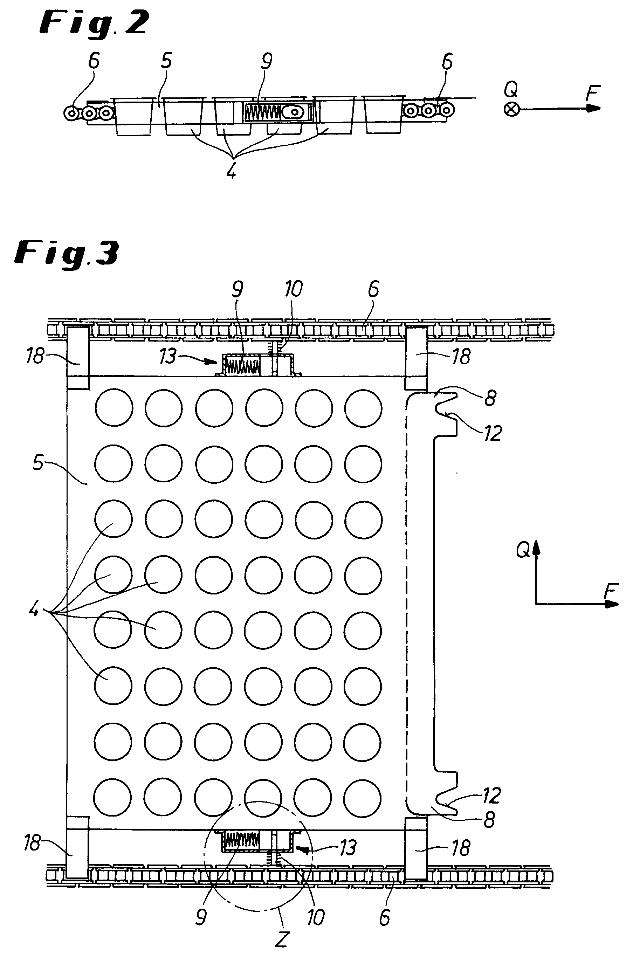

Details einer Palette 5 und des Förderelements 6 sind aus den Figuren 2 bis 4 zu erkennen.

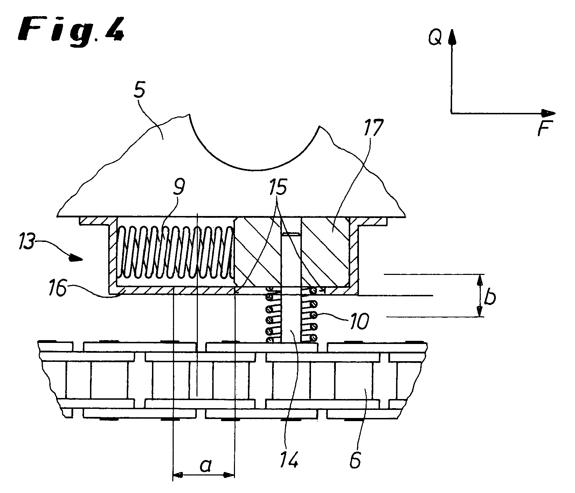

Die Palette 5 wird in Förderrichtung F durch das Förderelement 6 bewegt. Auf die Darstellung eines Palettenrahmens wurde verzichtet; die vorliegende Erfindung schließt allerdings eine solche Konstruktion mit ein. Das Förderelement 6 besteht konkret aus zwei Ketten, die seitlich der Palette 5 verlaufen. Die Palette 5 ist über ein Verbindungselement 13 (als Palettenmitnehmer wirkend) mit der Kette des Förderelements 6 verbunden, wie es am besten aus Fig. 4 hervorgeht. Drehmomentstützen 18 (s. Fig. 3) liegen auf den Ketten des Förderelements 6 auf und sorgen dafür, dass die Palette 5 beim Transport in einer waagrechten Stellung bleibt. An den Kettenumlenkungen gewähren die Drehmomentstützen 18 den Umlauf.

Ein Kettenbolzen 14 ist verlängert ausgebildet, und ragt in Richtung Palette 5 vor, nämlich in die horizontale Richtung Q quer zur Förderrichtung F. Das Verbindungselement 13 weist einen Rahmen 16 auf, der einen Durchbruch 15 hat. Der Rahmen 16 ist an der Palette 5 fixiert. Der Durchbruch 15 erlaubt, dass sich der Kettenbolzen 14 relativ zum Rahmen 16 in Förderrichtung F um einen gewissen Betrag bewegen kann. Der Kettenbolzen 14 ist dabei mit einem Führungsblock 17 verbunden, für den Entsprechendes gilt, d. h. er ist in Förderrichtung F relativ zum Rahmen 16 beweglich.

Wie sich aus Fig. 4 ergibt, sind pro Verbindungselement 13 zwei Federmittel 9 und 10 vorgesehen. Das Federmittel 9 federt den Führungsblock 17 relativ zum Rahmen 16 in Förderrichtung F ab und somit das Förderelement 6 relativ zur Palette 5. Das Federmittel 10 federt indes den Führungsblock 17 relativ zur Kette des Förderelements 6 in Richtung Q quer zur Förderrichtung F ab und somit die Palette 5 relativ zum Förderelement 6. Damit ergibt sich, dass die Palette 5 relativ zum Förderelement 6 schwimmend (elastisch) gelagert ist, und zwar sowohl in Förderrichtung F als auch in Richtung Q quer hierzu.

Folglich ist ein elastischer Verschiebeweg a in Förderrichtung F und ein elastischer Verschiebeweg b in Richtung Q (s. jeweils Fig. 4) gegeben, die das Maß der Flexibilität bilden, mit der die Palette 5 relativ zum Förderelement 6. beweglich ist.

In Fig. 3 ist weiter zu sehen, dass die Palette 5 mit zwei Gegenanschlägen 8 versehen ist, die in den seitlichen Bereichen der Palette 5 angeordnet ist. Die Gegenanschläge 8 fungieren als Zentriertasche und weisen eine V-förmige Ausnehmung 12 auf.

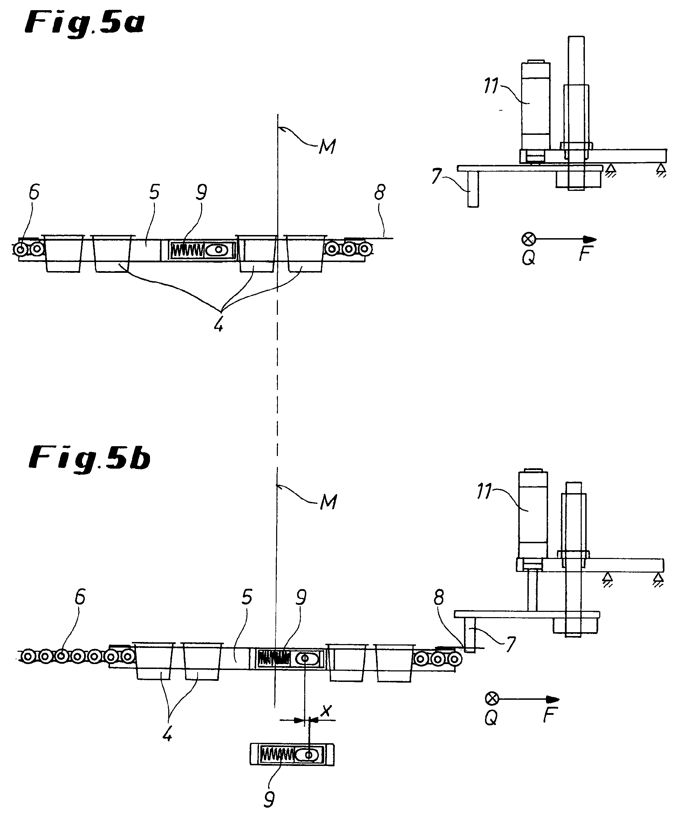

In den Figuren 5a ist das Heranfahren der Palette 5 an die Arbeitsstation skizziert, in Fig. 5b hat die Palette 5 die Arbeitsstation erreicht und ist exakt lagepositioniert.

Zu diesem Zweck sind in oder an der Arbeitsstation zwei Anschläge 7 vorgesehen, von denen in den Figuren 5a und 5b nur einer zu sehen ist. Der Anschlag 7 ist als zylindrischer Bolzen ausgebildet und mittels eines Bewegungsmittels 11 in der Höhe verfahrbar. Wenn sich die Palette 5 der Arbeitsstation nähert, wird der Anschlag 7 mit den Bewegungsmitteln 11 von der in Fig. 5a skizzierten oberen Position in die in Fig. 5b skizzierte untere Position gefahren. Damit gerät der Anschlag 7 in eine Höhe, in der er in den Eingriff mit dem Gegenanschlag 8 an der Palette 5 gelangen kann.

In Fig. 5b ist zu sehen, dass die Palette 5 mit ihren Gegenanschlägen 8 an die Anschläge 7 herangefahren wurden, so dass sich für die Palette 5 eine exakt definierte Position ergibt, in der der maßgebliche Arbeitsprozess in der Arbeitsstation durchgeführt werden kann.

Dabei wurde die Palette 5 durch die Förderelemente 6 nicht nur genau bis in die geometrische Mitte M der Palette 5 in die Arbeitsstation hineingefahren, sondern um einen Versatzbetrag x (s. Fig. 5b) weiter als bis in die besagte Mitte M. Damit wird sichergestellt, dass die Anschläge 7 in jedem Falle definiert und spielfrei an den Gegenanschlägen 8 anliegen, wenn die Palette 5 die Arbeitsstation erreicht hat. Die Federmittel 9 und 10 spannen die Palette 5 in dieser Lage elastisch vor.

### Bezugszeichenliste:

- 1: Anlage
- 2: Thermoformmaschine
- 3: Arbeitsstation
- 4: Thermoformprodukt
- 5: Palette
- 6: Förderelement
- 7: Anschlag
- 8: Gegenanschlag
- 9: Federmittel
- 10: Federmittel
- 11: Bewegungsmittel
- 12: V-förmige Ausnehmung
- 13: Verbindungselement
- 14: Kettenbolzen
- 15: Durchbruch
- 16: Rahmen
- 17: Führungsblock
- 18: Drehmomentstütze

- F: Förderrichtung
- Q: Richtung quer zur Förderrichtung
- M: geometrische Mitte der Palette
- a: Verschiebeweg
- b: Verschiebeweg
- x: Versatzbetrag

## Patentansprüche

1. Anlage (1) umfassend eine Thermoformmaschine (2) sowie eine Anzahl an Arbeitsstationen (3), wobei zu fertigende Thermoformprodukte (4) zwischen der Thermoformmaschine (2) und den Arbeitsstationen (3) auf Paletten (5) gefördert werden können, wobei die Paletten (5) mit einem Förderelement (6) verbunden sind und von diesem in eine Förderrichtung (F) zwischen der Thermoformmaschine (2) und den Arbeitsstationen (3) bewegt werden können,
**dadurch gekennzeichnet,**
**dass** an mindestens einer Arbeitsstation (3) mindestens ein in Förderrichtung (F) ortsfester mechanischer Anschlag (7) angeordnet ist und dass an den Paletten (5) mindestens ein korrespondierender Gegenanschlag (8) angeordnet ist, wobei die Paletten (5) relativ zum Förderelement (6) zumindest in Förderrichtung (F) elastisch gelagert sind, so dass zwischen der Palette (5) und dem Förderelement (6) eine Verschiebung in Förderrichtung (F) möglich ist.

2. Anlage nach Anspruch 1, **dadurch gekennzeichnet, dass** die Paletten (5) relativ zum Förderelement (6) in eine Richtung (Q) quer zur Förderrichtung (F) elastisch gelagert sind, so dass zwischen der Palette (5) und dem Förderelement (6) eine Verschiebung in Richtung (Q) quer zur Förderrichtung (F) möglich ist.

3. Anlage nach Anspruch 2, **dadurch gekennzeichnet, dass** Richtung (Q) quer zur Förderrichtung (F) horizontal ausgerichtet ist.

4. Anlage nach einem der Ansprüche 1 bis 3, **dadurch gekennzeichnet, dass** zwischen den Paletten (5) und dem Förderelement (6) zur Herstellung der Elastizität in Förderrichtung (F) und gegebenenfalls in Richtung (Q) quer zur Förderrichtung (F) Federmittel (9, 10) wirksam angeordnet sind.

5. Anlage nach Anspruch 4, **dadurch gekennzeichnet, dass** die Federmittel (9, 10) mechanische Federelemente sind, insbesondere Schraubenfedern oder Blattfedern.

6. Anlage nach Anspruch 4, **dadurch gekennzeichnet, dass** die Federmittel (9, 10) durch elastomere Materialien oder Gummimaterialien gebildet werden.

7. Anlage nach Anspruch 4, **dadurch gekennzeichnet, dass** die Federmittel (9, 10) durch pneumatische oder hydraulische Elemente gebildet werden.

8. Anlage nach einem der Ansprüche 1 bis 7, **dadurch gekennzeichnet, dass** an mindestens einer Arbeitsstation (3) zwei voneinander beabstandete mechanische Anschläge (7) angeordnet sind, wobei an den Paletten (5) zwei korrespondierende Gegenanschläge (8) angeordnet sind.

9. Anlage nach einem der Ansprüche 1 bis 8, **dadurch gekennzeichnet, dass** der mindestens eine mechanische Anschlag (7) als zylindrischer Bolzen ausgebildet ist.

10. Anlage nach einem der Ansprüche 1 bis 9, **dadurch gekennzeichnet, dass** der mindestens eine mechanische Anschlag (7) mit einem Bewegungsmittel (11) in Verbindung steht, mit dem er in der Höhe verstellbar ist.

11. Anlage nach einem der Ansprüche 1 bis 10, **dadurch gekennzeichnet, dass** der mindestens eine Gegenanschlag (7) eine V-förmige Ausnehmung (12) zur Aufnahme des Anschlags (7) aufweist.

12. Anlage nach einem der Ansprüche 1 bis 11, **dadurch gekennzeichnet, dass** das Förderelement (6) eine Förderkette ist.

13. Anlage nach einem der Ansprüche 1 bis 11, **dadurch gekennzeichnet, dass** das Förderelement (6) ein Zahnriemen, ein Flachriemen, eine Zahnstange oder eine Spindel ist.

14. Verfahren zum Betrieb einer Anlage (1) umfassend eine Thermoformmaschine (2) sowie eine Anzahl an Arbeitsstationen (3), bei dem zu fertigende Thermoformprodukte (4) zwischen der Thermoformmaschine (2) und den Arbeitsstationen (3) auf Paletten (5) gefördert werden, wobei die Paletten (5) mit einem Förderelement (6) verbunden sind und von diesem in eine Förderrichtung (F) zwischen der Thermoformmaschine (2) und den Arbeitsstationen (3) bewegt werden, wobei zwischen der Thermoformmaschine (2) und den Arbeitsstationen (3) jeweils ein konstanter definierter Wegabschnitt liegt, um den das Förderelement (6) bei jeder Taktung weiterbewegt wird,
**dadurch gekennzeichnet,**
**dass** das Förderelement (6) bei jeder Bewegung der Paletten (5) um einen definierten Versatzbetrag (x) in Förderrichtung (F) weiter bewegt wird, als es der geometrischen Mitte (M) der Palette (5) entspricht, wobei die Palette (5) federvorgespannt an einen Anschlag gezogen wird.

15. Verfahren nach Anspruch 14, **dadurch gekennzeichnet, dass** der Versatzbetrag (x) zwischen 3 mm und 50 mm beträgt, vorzugsweise zwischen 5 mm und 20 mm.

## Claims

1. A system (1), comprising a thermoforming machine (2) and a number of work stations (3), wherein thermoform products (4) to be produced can be conveyed on pallets (5) between the thermoforming machine (2) and the work stations (3), wherein the pallets (5) are connected to a conveying element (6) and can be moved by the latter in a conveying direction (F) between the thermoforming machine (2) and the work stations (3),
**characterized in**
**that** at least one mechanical stop (7) that is stationary in the conveying direction (F) is arranged on at least one work station (3) and that at least one corresponding counter stop (8) is arranged on the pallets (5), wherein the pallets (5) are elastically mounted relative to the conveying element (6) at least in the conveying direction (F) so that between the pallet (5) and the conveying element (6), a displacement in the conveying direction (F) is possible.

2. The system according to claim 1, **characterized in that** the pallets (5) are elastically mounted relative to the conveying element (6) in a direction (Q) transverse to the conveying direction (F) so that between the pallet (5) and the conveying element (6), a displacement in the direction (Q) transverse to the conveying direction (F) is possible.

3. The system according to claim 2, **characterized in that** the direction (Q) transverse to the conveying direction (F) is oriented horizontally.

4. The system according to any one of claims 1 to 3,
**characterized in that** between the pallets (5) and the conveying element (6), spring means (9, 10) are effectively arranged for establishing the elasticity in the conveying direction (F) and optionally in the direction (Q) transverse to the conveying direction (F).

5. The system according to claim 4, **characterized in that** the springs means (9, 10) are mechanical spring elements, in particular helical springs or leaf springs.

6. The system according to claim 4, **characterized in that** the spring means (9, 10) are formed by elastomer materials or rubber materials.

7. The system according to claim 4, **characterized in that** the spring means (9, 10) are formed by pneumatic or hydraulic elements.

8. The system according to any one of claims 1 to 7,
**characterized in that** on at least one workstation (3), two mechanical stops (7) are arranged spaced apart from one another, wherein two corresponding counter stops (8) are arranged on the pallets (5).

9. The system according to any one of claims 1 to 8,
**characterized in that** the at least one mechanical stop (7) is formed as a cylindrical pin.

10. The system according to any one of claims 1 to 9,
**characterized in that** the at least one mechanical stop (7) is in connection with a displacement means (11) by means of which it can be adjusted in height.

11. The system according to any one of claims 1 to 10,
**characterized in that** the at least one counter stop (7) has a V-shaped recess (12) for accommodating the stop (7).

12. The system according to any one of claims 1 to 11,
**characterized in that** the conveying element (6) is a conveyor chain.

13. The system according to ant one of claims 1 to 11,
**characterized in that** the conveying element (6) is a toothed belt, a flat belt, a toothed rack or a spindle.

14. A method for operating a system (1) comprising a thermoforming machine (2) an a number of work stations (3), in which thermoform products (4) to be produced are conveyed on pallets (5) between the thermoforming machine (2) and the work stations (3), wherein the pallets (5) are connected to a conveying element (6) and are moved by the latter in a conveying direction (F) between the thermoforming machine (2) and the work stations (3), wherein between the thermoforming machine (2) and the work stations (3) there is in each case a constant defined conveying path section by which the conveying element (6) is advanced with each cycle,
**characterized in**
**that** with each movement of the pallets (5), the conveying element (6) is advanced farther in the conveying direction (F) by a defined displacement amount (x) than it corresponds to the geometrical center (M) of the pallet (5), wherein the pallet (5) is pulled against a stop in a spring-preloaded manner.

15. The method according to claim 14, **characterized in**
**that** the displacement amount (x) ranges between 3 mm and 50 mm, preferably between 5 mm and 20 mm.

## Revendications

1. Installation (1) comprenant une machine de thermoformage (2) ainsi qu'un nombre de postes de travail (3), les produits thermoformés (4) à fabriquer pouvant être transportés sur palettes (5) entre la machine de thermoformage (2) et les postes de travail (3), les palettes (5) étant reliées à un élément de transport (6) et pouvant être déplacées par celui-ci dans une direction de transport (F) entre la machine de thermoformage (2) et les postes de travail (3),
**caractérisée en ce**
**qu'**une butée mécanique fixe (7) dans la direction du transport (F) est disposée au moins sur un poste de travail (3) et en ce qu'au moins une contre-butée correspondante (8) est disposée sur les palettes (5), les palettes (5) étant logées de façon élastique par rapport à l'élément de transport (6) au moins dans la direction du transport (F) de manière à ce qu'un déplacement dans la sens du transport (F) est possible entre la palette (5) et l'élément de transport (6).

2. Installation selon la revendication 1, **caractérisée en ce que** les palettes (5) sont logées de façon élastique par rapport à l'élément de transport (6) dans une direction (Q) transversalement à la direction du transport (F) de sorte qu'entre la palette (5) et l'élément de transport (6) un déplacement est possible dans la direction (Q) transversalement à la direction du transport (F).

3. Installation selon la revendication 2, **caractérisée en ce que** la direction (Q) est orientée de manière horizontale transversalement à la direction du transport (F).

4. Installation selon l'une quelconque des revendications 1 à 3, **caractérisée en ce que** des moyens faisant ressort (9, 10) sont disposés de manière active entre les palettes (5) et l'élément de transport (6) pour réaliser l'élasticité dans la direction du transport (F) et le cas échéant dans la direction (Q) transversalement à la direction du transport (F).

5. Installation selon la revendication 4, **caractérisée en ce que** les moyens faisant ressort (9, 10) sont des éléments faisant ressort mécaniques, en particulier des ressorts hélicoïdaux ou des ressorts à lame.

6. Installation selon la revendication 4, **caractérisée en ce que** les moyens faisant ressort (9, 10) sont formés par des matériaux élastomères ou des matériaux à base de caoutchouc.

7. Installation selon la revendication 4, **caractérisée en ce que** les moyens faisant ressort (9, 10) sont formés par des éléments pneumatiques ou hydrauliques.

8. Installation selon l'une quelconque des revendications 1 à 7, **caractérisée en ce que** deux butées mécaniques (7) à distance l'une de l'autre sont situées au moins sur un poste de travail (3), deux contre-butées correspondantes (8) étant disposées sur les palettes (5).

9. Installation selon l'une quelconque des revendications 1 à 8, **caractérisée en ce qu'**au moins une butée mécanique (7) est constituée comme une tige cylindrique.

10. Installation selon l'une quelconque des revendications 1 à 9, **caractérisée en ce qu'**au moins une butée mécanique (7) est en liaison avec un moyen de déplacement (11) avec lequel elle peut être réglée en hauteur.

11. Installation selon l'une quelconque des revendications 1 à 10, **caractérisée en ce qu'**au moins une contre-butée (7) comporte un évidement en forme de V (12) pour loger la butée (7).

12. Installation selon l'une quelconque des revendications 1 à 11, **caractérisée en ce que** l'élément de transport (6) est une chaîne de transport.

13. Installation selon l'une quelconque des revendications 1 à 11, **caractérisée en ce que** l'élément de transport (6) est une courroie crantée, une courroie plate, une crémaillère ou une broche.

14. Procédé pour faire fonctionner une installation (1) comprenant une machine de thermoformage (2) ainsi qu'un nombre de postes de travail (3), pour lequel les produits thermoformés à fabriquer (4) sont transportés sur des palettes (5) entre la machine de thermoformage (2) et les postes de travail (3), les palettes (5) étant reliées à un élément de transport (6) et pouvant être déplacées par celui-ci dans une direction de transport (F) entre la machine de thermoformage (2) et les postes de travail (3), un tronçon du chemin constant défini restant respectivement entre la machine de thermoformage (2) et les postes de travail (3), duquel l'élément de transport (6) est avancé à chaque cadence
**caractérisé en ce**
**que** l'élément de transport (6) est avancé d'un montant de déport défini (x) dans la direction du transport (F) à chaque mouvement des palettes (5) dès lors que cela correspond au milieu géométrique (M) de la palette (5), la palette (5) étant tirée sur une butée sous la contrainte d'un ressort.

15. Procédé selon la revendication 14, **caractérisé en ce que** l'importance du déport (x) est entre 3 mm et 50 mm, de préférence entre 5 mm et 20 mm.
